# EUROPEAN PATENT APPLICATION

(11) **EP 3 720 248 A1**
(43) Date of publication of application: **07.10.2020**
(21) Application number: 18883643.1
(22) Date of filing: 28.11.2018
(51) Int. Cl.: H05B 6/80, B01J 19/12, H05B 6/64, H05B 6/74

(54) **MICROWAVE TREATMENT DEVICE, MICROWAVE TREATMENT METHOD, AND CHEMICAL REACTION METHOD**

(30) Priority: 28.11.2017 JP 2017228474
(71) Applicant: National Institute Of Advanced Industrial Science, Tokyo 100-8921 (JP)
(72) Inventor: NISHIOKA, Masateru, Sendai-shi, Miyagi 983-8551 (JP); MIYAKAWA, Masato, Sendai-shi, Miyagi 983-8551 (JP)
(74) Representative: Forstmeyer, Dietmar
(86) International application number: PCT/JP2018/043758
(87) International publication number: WO 2019/107402

(57) **Abstract**

The present invention provides a microwave processing apparatus, including: a cavity resonator having a cavity that forms a standing wave of a microwave; and a dielectric portion disposed occupying at least one-fifth of a volume of the cavity, in the cavity, in which an object to be processed being at through at least one end side of the cavity resonator is disposed in the cavity resonator, and the object to be processed is processed by the standing wave.

## Description

### FIELD OF THE INVENTION

The present invention relates to a microwave processing apparatus, a microwave processing method and a chemical reaction method.

### BACKGROUND OF THE INVENTION

Microwaves have been widely used in household appliances, such as microwave ovens, and then practical development and use as industrial heating systems have been studied. Since microwave irradiation directly heats an object to be heated, the object can be heated in a short time and there is an advantage of reducing unevenness of temperature due to heat conduction. In addition, there are advantages that the object can be heated in a non-contact manner and only those with good microwave absorption can be selectively heated.

Since the microwaves which are electromagnetic waves change in energy intensity in a wavelength cycle, uneven heating is likely to occur. Therefore, countermeasures, such as irregularly reflecting the electromagnetic waves, are often performed by moving a position of the object to be heated over time.

In order to address this problem of uneven heating, use of a standing wave of a microwave has been studied. For example, Patent Literature 1 describes a microwave heating apparatus using a cavity resonator. In this technique, an axially symmetric microwave electric field parallel to a central axis is generated in a cylindrical cavity resonator, and a chemical reaction proceeds in a circular tube disposed in a portion where electric field strength is concentrated. Patent Literature 2 describes a flow-type microwave chemical reactor in which a flow tube is disposed along a portion where the electric field strength of a single-mode standing wave formed in the cavity resonator is locally maximized, and fluid is allowed to flow through the flow tube so that the fluid is heated quickly and uniformly. Patent Literature 3 describes to use a feedback control unit that controls an oscillation frequency of a microwave generator so as to match a current resonance frequency of the cavity resonator. Thus, a resonance state of TM₀₁₀ is always maintained, so that high-precision heat treatment can be performed.

As described above, techniques have been developed in which the standing wave is formed inside the cavity by using the cavity resonator, to uniformly and efficiently heat the object to be heated.

### CITATION LIST

### PATENT LITERATURES

Patent Literature 1: JP-A-2005-322582 ("JP-A" means unexamined published Japanese patent application)
Patent Literature 2: JP-A-2010-207735
Patent Literature 3: JP-A-2009-80997

### SUMMARY OF THE INVENTION

### TECHNICAL PROBLEM

However, in the techniques described in those Patent Literatures, a certain space is required in the cavity resonator in order to form the standing wave of a microwave . This is because it is required a microwave irradiation area for forming the standing wave corresponding to a wavelength of the supplied microwave. Therefore, if the cavity resonator is large, a size of the microwave processing apparatus cannot be reduced naturally. This is a constraint that cannot be overlooked on an application range of the microwave processing apparatus.

The present invention is contemplated for providing downsizing of the microwave processing apparatus using the standing wave.

### MEANS FOR SOLVING THE PROBLEMS

The inventors of the present invention have conducted intensive studies in view of the above problems, and as a result, we have found that by arranging a dielectric in the cavity resonator, it is possible to sufficiently shorten the wavelength of the microwave required to form the standing wave, and thus a desired standing wave can be formed even if the resonator is downsized.

The inventors of the present invention have further studied based on these findings, and have been completed the present invention.

That is, the problems of the present invention can be solved by the following means:
[1] A microwave processing apparatus, including:
   a cavity resonator having a cavity that forms a standing wave of a microwave; and
   a dielectric portion disposed occupying at least one-fifth of a volume of the cavity, in the cavity,
   wherein an object to be processed that can be put in and out of the cavity resonator is disposed in the cavity resonator, and
   the object to be processed is processed by the standing wave.
[2] The microwave processing apparatus described in the above item [1], wherein when a dielectric loss factor of the object to be processed is εₘ" and the dielectric loss factor of the dielectric portion is ε_{d}", the microwave processing apparatus satisfies εₘ" > ε_{d}".
[3] The microwave processing apparatus described in the above item [1] or [2], wherein the object to be processed is disposed at a position where an electric field strength or a magnetic field strength in the cavity resonator becomes locally maximum.
[4] The microwave processing apparatus described in any one of the above items [1] to [3], wherein the object to be processed is disposed in a tube disposed in the cavity resonator, and the object to be processed that is filled in or continuously introduced into the tube is processed by the microwave.
[5] The microwave processing apparatus described in any one of the above items [1] to [4], wherein when a resonance frequency of the cavity resonator is f and a speed of light in vacuum is c, a wavelength λ of the microwave propagating in the air is expressed as λ = c/f, and a maximum dimension L1 of the cavity satisfies L1 < λ/√2.
[6] The microwave processing apparatus described in any one of the above items [1] to [5], wherein when a wavelength of the microwave propagating in the air is λ, and a diameter of an equivalent volume sphere of the cavity resonator calculated as a cubic root of an internal volume V of the cavity is L2, the cavity resonator satisfies L2 < λ/√2.
[7] The microwave processing apparatus described in any one of the above items [1] to [6], wherein the cavity resonator is a cylindrical resonator with the cavity of diameter D and height H, which forms a standing wave in TMₘₙ₀ mode, and when a resonance frequency of the cavity resonator is f and a speed of light in vacuum is c, a wavelength λ of the microwave propagating in the air is expressed as λ = c/f, and the cavity resonator satisfies D < {(m + n) × λ}√2. Herein, m is an integer of 0 or more, and n is an integer of 1 or more.
[8] The microwave processing apparatus described in any one of the above items [1] to [6], wherein the cavity resonator is a rectangular resonator with the cavity of width W1, depth W2, and height H, which forms a standing wave in TMₘₙ₀ mode, and when a resonance frequency of the cavity resonator is f and a speed of light in vacuum is c, a wavelength A of the microwave propagating in the air is expressed as λ = c/f, and the cavity resonator satisfies W1 < {(m + n) × λ}√2 and W2 < {(m + n) × λ}√2. Herein, m is an integer of 0 or more, and n is an integer of 1 or more.
[9] The microwave processing apparatus described in any one of the above items [1] to [6], wherein the cavity resonator is a polygonal resonator with the cavity of cross-sectional area S and height H, which forms a standing wave in TMₘₙ₀ mode, and when a resonance frequency of the cavity resonator is f and a speed of light in vacuum is c, a wavelength λ of the microwave propagating in the air is expressed as λ = c/f, and a square root value L3 of the cross-sectional area S satisfies L3 < {(m + n) × λ}/√2. Herein, m is an integer of 0 or more, and n is an integer of 1 or more.
[10] The microwave processing apparatus described in any one of the above items [1] to [6], wherein the cavity resonator is a rectangular resonator that forms a standing wave in TEₗ₀ₙ mode, and when a length in a microwave traveling direction in the cavity is Lm, a length in a direction in which an electric field changes is Le, a resonance frequency of the cavity resonator is f and a speed of light in vacuum is c, a wavelength λ of the microwave propagating in the air is expressed as λ = c/f, and the cavity resonator satisfies Le < λ/√2 and Lm < (n × λ)/√2. Herein, l and n are integers of 1 or more.
[11] The microwave processing apparatus described in any one of the above items [1] to [10], wherein the dielectric portion has a relative dielectric constant of 1.5 or more and a dielectric loss factor of 0.1 or less.
[12] The microwave processing apparatus described in any one of the above items [1] to [11], wherein the object to be processed is a gas, a liquid, or a solid.
[13] The microwave processing apparatus described in any one of the above items [1] to [12], wherein the microwave processing apparatus is a chemical reactor that processes the object to be processed with the microwave, to cause a chemical reaction.
[14] A microwave processing method, including: using the microwave processing apparatus according to any one of the above items [1] to [13], to process the object to be processed by the standing wave of a microwave.
[15] A chemical reaction method, including: using the microwave processing apparatus according to any one of the above items [1] to [13], to cause a chemical reaction by processing the object to be processed.

### EFFECTS OF THE INVENTION

The microwave processing apparatus of the present invention can be miniaturized and has a wide application range, and can irradiate the object to be processed with the microwave standing wave at a high energy density.

### BRIEF DESCRIPTION OF DRAWINGS

Figs. 1(A) and 1(B) are views schematically showing a preferred embodiment of a microwave processing apparatus of the present invention, in which Fig. 1(A) is a perspective view showing an upper portion thereof in a transverse cross-section, and Fig. 1(B) is a vertical cross-sectional view of a cavity resonator taken along a line A-A shown in Fig. 1(A).
Figs. 2(A) and 2(B) are views schematically showing a preferred embodiment of a rectangular cavity resonator, in which Fig. 2(A) is a perspective view showing an upper portion thereof in a transverse cross-section, and Fig. 2(B) is a vertical cross-sectional view of the cavity resonator taken along a line B-B shown in Fig. 2(A).
Figs. 3(A) and 3(B) are views schematically showing a preferred embodiment of a polygonal cavity resonator, in which Fig. 3(A) is a perspective view showing an upper portion thereof in a transverse cross-section, and Fig. 3(B) is a vertical cross-sectional view of the cavity resonator taken along a line C-C shown in Fig. 3(A).
Fig. 4 is a diagram showing forward transmission characteristics of the cavity resonator when a dielectric portion is provided in the cavity resonator in Example 2, and when the dielectric portion is not provided therein, in which a vertical axis is a value of S21 and a horizontal axis is a microwave frequency.
Fig. 5 is a diagram showing measurement results of a change in outlet temperature depending on the presence or absence of microwave irradiation when pure water is fed to a flow tube.
Fig. 6 is a diagram showing measurement results obtained by performing temperature adjustment on a flow rate of pure water by microwave power.
Fig. 7 is a diagram showing measurement results of a time change of temperature and microwave power when a solid catalyst is heated, which is filled in a quartz tube, as an object to be processed.
Fig. 8 is a cross-sectional view schematically showing the cavity resonator and a reaction tube of another preferred embodiment of the microwave processing apparatus of the present invention.
Fig. 9 is a diagram showing the forward transmission characteristics of the cavity resonator in Example 5 (without any reaction tube) and Example 6 (filled with pure water), in which the vertical axis is the value of S21 and the horizontal axis is the microwave frequency.
Fig. 10 is a diagram showing temperature rise characteristics of a microwave discriminator when a microwave having an output of 100W is irradiated in Example 6, in which the vertical axis is temperature and the horizontal axis is time.
Fig. 11 is a diagram showing the forward transmission characteristics of the cavity resonator in Example 7 (without any reaction tube) and Example 7 (filled with pure water), in which the vertical axis is the value of S21 and the horizontal axis is the microwave frequency.
Fig. 12 is a cross-sectional view schematically showing a preferred mode of still another cavity resonator (the cavity resonator that is used in Example 9) of the microwave processing apparatus of the present invention.
Fig. 13 is a diagram showing the forward transmission characteristics of the cavity resonator in Example 9, in which the vertical axis is the value of S21 and the horizontal axis is the microwave frequency.

### MODE FOR CARRYING OUT THE INVENTION

Hereinafter, a preferred embodiment of a microwave processing apparatus of the present invention will be described with reference to the drawings.

### [Microwave processing apparatus]

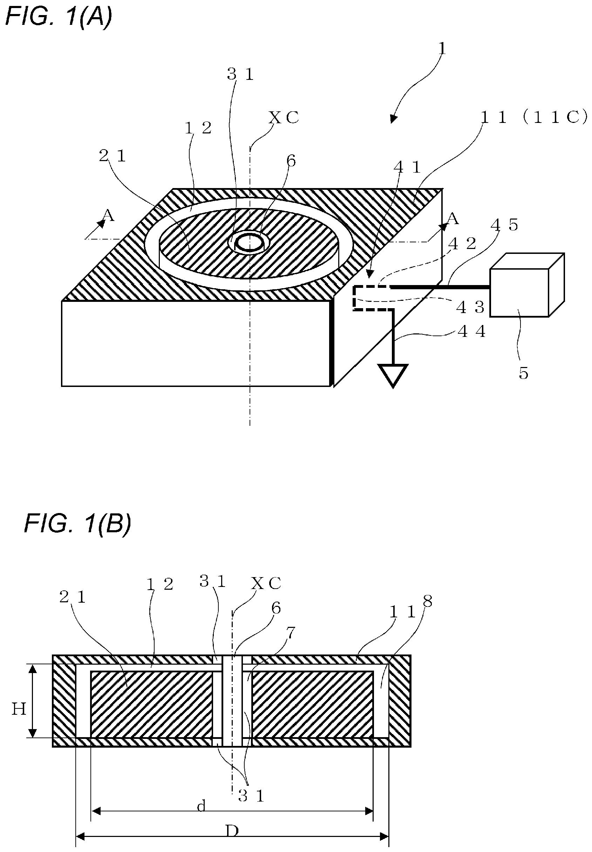

The preferred embodiment of the microwave processing apparatus of the present invention will be described with reference to Figs. 1(A) and 1(B).

As shown in Figs. 1(A) and 1(B), a microwave processing apparatus 1 includes a cavity resonator 11, a dielectric portion 21 disposed in a cavity 12 of the cavity resonator 11, a tube 6 which is disposed in the cavity resonator 11 and in which an object to be processed (not shown) is disposed, and an antenna unit 41 for supplying a microwave forming a standing wave. When the object to be processed is disposed, the object to be processed may be either in a flowing state or in a stationary state. In an illustrated example, a flow tube 6 is disposed as a pipe having both ends open in a through-hole 31 provided in the cavity resonator. The through-hole 31 may be used as the flow tube 6. In this case, the flow tube 6 need not be provided. Hereinafter, a structure in which the flow tube 6 is disposed in the through-hole 31 will be described. Although the figure shows a space 8 and an upper portion of the cavity 12 between the cavity resonator 11 and the dielectric portion 21, the space 8 and the upper portion of the cavity 12 need not be provided. Although not shown, a through-hole may be provided through one end of the cavity resonator 11 and passing through the dielectric portion 21.

### <Cavity resonator>

The cavity resonator (cavity) 11 to be used in the microwave processing apparatus 1 has one microwave supply port (antenna). The cavity resonator 11 can preferably form the standing wave in TMₘₙ₀ mode (m is an integer of 0 or more, and n is an integer of 1 or more) or in TEₗ₀ₙ mode (where I and n are integers of 1 or more), when the microwave is supplied. For example, as will be described in detail below, use can be made of the cavity resonator 11 having the cavity 12 of various shapes described below, such as a cylindrical type and a rectangular tube type.

A size of the cavity resonator 11 can be appropriately designed according to a purpose thereof. The cavity resonator 11 desirably has a small electric resistivity, and is usually made of metal, and as an example, use can be made of aluminum, copper, iron, magnesium, brass, stainless steel, an alloy thereof, or the like. Alternatively, the cavity resonator 11 can also be formed by coating a film having a small metal resistance. In this case, a structure of the cavity resonator can be made of an insulator, such as resin or ceramic, and it can be used after being coated with, for example, gold, silver, copper, aluminum, zinc, magnesium, or an alloy thereof, having a thickness of about 0.1 µm to 1 mm, on inner and outer faces thereof.

The dielectric portion 21 is disposed occupying at least one-fifth of a volume of the cavity 12, in order to exhibit an effect of shortening a wavelength of the standing wave which is formed by the microwave. It is disposed occupying preferably at least one-fourth of the volume, more preferably at least one-third of the volume, and still more preferably at least two-fifths of the volume. Particularly when there is a great demand for miniaturization, it is disposed occupying preferably at least half of the volume. Specifically, as an example, the dielectric portion 21 is preferably formed as a columnar body having a similar cross-section having an area smaller than a cross-sectional shape in a direction perpendicular to a central axis XC of the cavity 12. It is preferred that when a cross-section of the cavity is circular, the dielectric portion 21 is formed in a column, when the cross-section of the cavity is a quadrangle, the dielectric portion 21 is formed in a quadrangular prism, and when the cross-section of the cavity is a polygon, the dielectric portion 21 is formed in a polygonal prism. Further, it is preferred that a distance between a wall face of the cavity 12 and a side face of the dielectric portion 21 is equal at any position. However, when it is difficult to process and arrange the dielectric portion 21 into the columnar body having a cross-section similar to the cavity cross section, the present invention can be implemented with a different cross-sectional shape. For example, when the cross-section of the cavity is the polygon, it is also a preferable example to use the column having an outer diameter shorter than a diameter of an inscribed circle of the polygon.

It is desirable that the dielectric portion 21 has a symmetrical shape with respect to the central axis XC. Since it has a symmetrical shape, it can suppress electric field strength distribution inside the through-hole 31 from being disturbed. As an example of the dielectric portion 21 having a symmetrical shape, the column or a regular polygonal column is preferable. However, when disturbance of the electric field strength distribution does not affect temperature distribution of the object to be processed, an object of the present invention can be achieved even if it is not strictly symmetrical. For example, an observation window for internal observation can be provided on the side face of the dielectric portion.

It is preferred that a central axis of the through-hole 31 and a central axis of the dielectric portion 21 coincide with the central axis XC of the cavity. This can suppress the electric field strength distribution inside the through-hole 31 from being disturbed. As an example, the dielectric 21 may be a tubular one. However, when the disturbance of the electric field strength distribution does not affect the temperature distribution of the object to be processed, the object of the present invention can be achieved even if the central axis of the dielectric portion 21 does not strictly coincide with the central axis XC.

These are merely examples, and the dielectric portion 21 can have various forms with respect to the cavity 12.

The dielectric portion 21 may be composed of a plurality of members. For example, it may be a double pipe that coincides with the central axis of the through-hole 31. Each member can be made of different materials. When the object to be processed is at a high temperature of 100°C or more, an inside of the dielectric portion 21 can be made of a material having heat resistance, and an outside of the dielectric portion 21 can be made of a material having high heat insulation performance. In this case, by providing an air layer or a vacuum layer inside the dielectric portion 21 and outside the dielectric portion 21, heat insulation can be improved and the object to be processed can be heated with high efficiency.

As an example of a case where the dielectric portion 21 is composed of the plurality of members, when the flow tube 6 is made of a material such as glass that is likely to be damaged, the dielectric portion 21 having a function of preventing scattering of fragments can be disposed outside the flow tube 6. As the dielectric portion having a scattering prevention function, for example, Teflon (registered trademark), PEEK (registered trademark), glass fiber or the like can be used. Further, when used in an environment with a lot of vibration, it is preferable to use the dielectric portion having a buffer function. As an example, a structure made of a sponge-like resin, a gel-like polymer, or a glass fiber can be used.

In addition, when the microwave is supplied into the cavity 12, a relative dielectric constant is preferably 1.5 or more, and more preferably 2 or more so that a frequency of the standing wave formed in the dielectric portion 21 is shorter than the frequency of the standing wave formed in the cavity 12. Further, from a viewpoint of miniaturization, it is more preferably 7 or more. From the viewpoint of further weight reduction, it is still more preferably 20 or more. Thus, the cavity resonator 11 can be downsized by shortening the wavelength of the standing wave formed in the dielectric portion 21 and by narrowing a standing wave formation region.

In order to realize such miniaturization, it is preferable to reduce heat generated by the dielectric portion 21 absorbing the microwave. Therefore, in order to reduce influence of heat generation of the dielectric portion 21, it is preferred that when a dielectric loss factor of the dielectric portion 21 is ε_{d}", a dielectric loss factor εₘ" of the object to be processed is εₘ" > ε_{d}". Further, ε_{d}" is preferably 0.1 or less, more preferably ε_{d}" is 0.05 or less, still more preferably ε_{d}" is 0.005 or less, and particularly preferably ε_{d}" is 0.0005 or less. In this way, by reducing microwave absorption by the dielectric portion 21, the microwave absorption by the object to be processed (not shown) disposed in the through-hole 31 can be increased.

The through-hole 31 is a hole in which the object to be processed (not shown) is disposed or the flow tube to convey the object to be processed is disposed when it is a fluid object to be processed, and is disposed, for example, inside the cavity resonator 11 so as to communicate with upper and lower faces or one face thereof. The cavity resonator 11 and the dielectric portion 21 are preferably designed such that the electric field strength is uniform in a direction of the central axis XC of the through-hole 31 and the standing wave having a local maximum of the electric field is formed near the through-hole 31 on a plane perpendicular to the central axis XC. By matching such a through-hole 31 or the flow tube 6 with a portion where the electric field strength is locally maximized, the object to be processed can be efficiently and rapidly heated. Further, even if the flow tube 6 is not disposed and the object to be processed is directly disposed in the through-hole 31 or is caused to flow though the through-hole 31, the object to be processed can be efficiently and rapidly heated as in a case where the object to be processed is allowed to flow through the flow tube 6.

The flow tube 6 need not be a straight pipe, and for example, a spiral flow tube can be used. When the spiral flow tube is used, an effect of suppressing unevenness of the electric field strength applied to a fluid flowing through the spiral can be expected by matching a central axis of the spiral with the central axis XC of the cavity resonator. Further, a plurality of flow tubes may be arranged, and they may join or branch inside the through-hole 31. Furthermore, the flow tube 6 is preferably disposed at a position where the magnetic field strength is locally maximized. That is, the cavity resonator 11 and the dielectric portion 21 may be designed such that magnetic field strength is uniform in the direction of the central axis XC of the through-hole 31 and the standing wave having a local maximum of a magnetic field is formed near the through-hole 31 on the plane perpendicular to the central axis XC.

The antenna unit 41 has an antenna function for introducing the microwave.

The antenna unit 41 has an antenna wire 42 disposed from an outer wall side to an inner side of the cavity resonator 11, an antenna 43 serving as the microwave supply port, and a grounding wire 44 of the antenna 43. In Figs. 1(A) and 1(B), the antenna unit 41 is connected to ground potential through the grounding wire 44, but a cable 45 may be a coaxial wire and antenna unit 41 may be connected to a ground conductor (an outer conductor) of the coaxial wire. The antenna unit 41 is a loop line including the antenna 43 and the outer wall of the cavity resonator 11 at the ground potential, and functions as a loop antenna. The antenna 43 may be disposed in the space 8. Alternatively, the antenna 43 may be disposed inside the cavity 12 and on an outer peripheral face side thereof. If it is not appropriate to provide the space 8, the antenna 43 may be provided inside the dielectric portion 21. Alternatively, a recess may be provided in a part of the outer wall of the cavity resonator 11, and the antenna 43 may be disposed in the recess so as to function as the loop antenna. The magnetic field is excited in a loop space by the microwave supplied from the antenna 43, and the standing wave is formed in the cavity 12 (including the dielectric portion 21) by the magnetic field.

For example, even if a conventional metal cavity resonator is formed of aluminum having a low density, if the size can be reduced by one order of magnitude or more as in the present invention, it is possible to significantly reduce the weight even if the dielectric portion is present in the cavity, thereby expanding a range of application.

With the above structure, the object to be processed disposed in the flow tube 6 is irradiated with the microwave (standing wave). At this time, the standing wave formation region is defined by an inner face of the cavity 12. For example, when the cylindrical cavity 12 is disposed, a diameter of the cylindrical shape can be set to the wavelength of the microwave at which the standing wave is formed.

In the cavity resonator 11, it is preferred that energy of the standing wave formed in the cavity 12 is locally maximized at a position of the flow tube 6 (central axis XC), and the energy of the standing wave is uniform in the direction of the central axis XC. For example, in the case of the cylindrical cavity 12 in which the standing wave in TM₀ₙ₀ mode (n is an integer of 1 or more) is generated, the electric field strength of the central axis XC of the cylindrical shape is locally maximized, and the electric field strength along the central axis XC is uniform. Therefore, the flow tube 6 or the through-hole 31 is preferably disposed on the central axis XC of the cavity 12.

The cavity resonator 11 is provided with a microwave generator 5 (see Figs. 1(A) and 1(B)), and the microwave is supplied from the microwave generator 5 into the cavity 12 of the cavity resonator 11 through the cable 45, the antenna wire 41, and an antenna 43. Generally, an S band centered at 2.45 GHz is used as a microwave frequency. Alternatively, a 5.8 GHz band or a 915 MHz band may be used, however, the present invention is not limited to a specific frequency.

In the microwave processing apparatus 1, the flow tube 6 is disposed inside the through-hole 31, and the object to be processed (not shown) is present in the flow tube 6, or the object to be processed flows therethrough. The microwave is supplied from the microwave generator 5 to the cavity resonator 11 in which the object to be processed is disposed as described above, so that the standing wave is formed in the cavity 12. If the flow tube 6 is provided along the portion where the electric field strength of the standing wave is locally maximized, the object to be processed in the flow tube 6 can be efficiently and quickly heated. In the microwave processing apparatus 1, the microwave forming the standing wave is supplied into the cavity 12 from the antenna 43 provided in the cavity resonator 11.

In the microwave processing apparatus 1, the microwave supplied from the microwave generator 5 is supplied after the frequency is adjusted. Since the frequency is adjusted, the electric field strength distribution of the standing wave formed in the cavity resonator 11 can be controlled to a desired distribution state, and intensity of the standing wave can be adjusted by an output of the microwave. That is, it is possible to control a heating state of the object to be processed.

The frequency of the microwave supplied from the antenna 43 is such that a specific single-mode standing wave can be formed in the cavity resonator 11.

The structure of the microwave processing apparatus 1 of the present invention will be described in order.

### <Specific example of a cavity resonator>

A wall shape of the cavity 12 of the cavity resonator 11 may be the cylindrical type or the rectangular tube type. In the present specification, the term "cylindrical type" is used to mean that a cross-sectional shape perpendicular to the central axis XC of the resonator is circular, elliptical or oblong. Further, the term "rectangular tube type" is used to mean that the cross-sectional shape perpendicular to the central axis XC is rectangular or polygonal, and the cross-sectional shape is preferably a quadrangle to a dodecagon. Further, corners of the polygon may have a rounded shape. In the case of the polygon, if there are many corners, it can be approximated to the cylindrical type.

The size of the cavity resonator 11 is preferably smaller as long as the standing wave can be formed, but can be appropriately designed according to the purpose. The dielectric portion 21 desirably has a high relative dielectric constant, and is preferably made of resin, ceramic, glass, a composite material, or the like. As the resin, for example, Teflon (registered trademark), polyetheretherketone (PEEK), or the like can be used. As the ceramic, for example, alumina, zirconia, forsterite, silicon nitride, aluminum nitride, or the like can be used. As the glass, for example, quartz, sapphire, borosilicate glass, or the like can be used. As the composite material, fiber reinforced plastic, polymer gel, or the like can be used.

The dielectric portion 21 can be filled with a liquid dielectric. Examples of the liquid dielectric include cyclic hydrocarbons such as benzene and toluene, linear hydrocarbons such as hexane, heptane, octane, nonane, decane, undecane, dodecane, dodecene, tetradecene, and octadecene, those obtained by replacing those hydrogens with halogens such as chlorine or fluorine, and other non-polar solvents such as Fluorinert and carbon tetrachloride. In addition, since ice has a smaller dielectric loss factor than water, it can be used as a solid after being filled in a liquid state and then cooled.

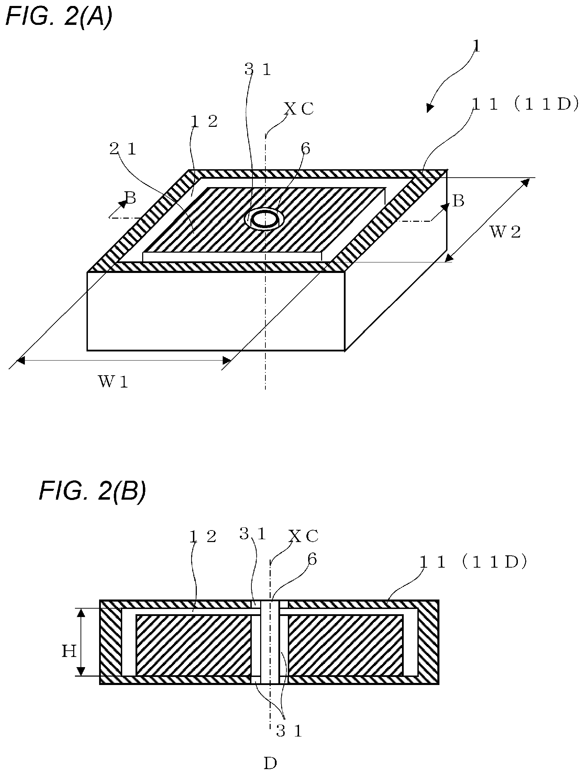

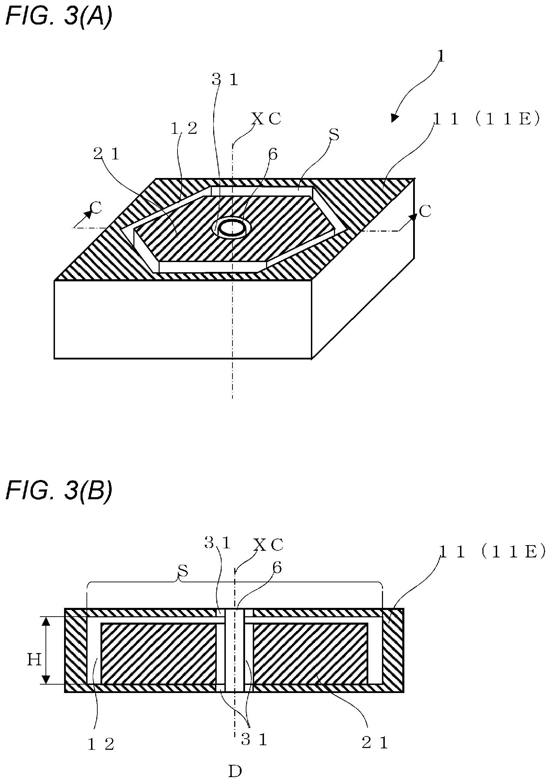

Next, the cavity resonator used in the microwave processing apparatus of the present invention will be described below.
(1) When a resonance frequency of the cavity resonator 11 is f, and a speed of light in vacuum is c, a wavelength λ of the microwave propagating in air is expressed as λ = c/f, and the cavity resonator 11 preferably satisfies L1 < λ/√2 with respect to a maximum dimension L1 of the cavity 12. The maximum dimension of the cavity 12 is a diameter or a major diameter of the cavity 12 in the cross-sectional shape, for example, since the cross-sectional shape is circular, elliptical or oblong in the case of the cylindrical cavity resonator. Further, in the case of the rectangular or polygonal cavity resonator, since the cross-sectional shape is rectangular or polygonal, the maximum dimension is the longest diagonal among diagonals thereof.
(2) When the wavelength of the microwave propagating in the air is A and a diameter of an equivalent volume sphere of the cavity 12 calculated as a cubic root of an internal volume V of the cavity 12 is L2, the cavity resonator 11 preferably satisfies L2 < λ/√2. If this condition is not satisfied, a higher-order standing wave may be formed in the cavity resonator 11 and an electromagnetic field strength may be uneven in the object to be processed. Note that the equivalent volume sphere means a sphere having the internal volume V.
(3) As shown in Figs. 1(A) and 1(B), the cavity resonator 11 (11C) is the cylindrical type cavity resonator forming the standing wave in TMₘₙ₀ mode (where m is an integer of 0 or more and n is an integer of 1 or more) and having the cavity 12 of diameter D and height H. When the resonance frequency of the cavity resonator 11C is f and the speed of light in vacuum is c, the wavelength λ of the microwave propagating in the air is expressed as λ = c/f, and D < {(m + 2)×λ}√₂ is preferably satisfied. When this condition is not satisfied, a standing wave having a higher order than the TMₘₙ₀ mode may be formed, and the electromagnetic field strength may be uneven in the object to be processed.
(4) As shown in Figs. 2(A) and 2(B), the cavity resonator 11 (11D) is a rectangular tube type (rectangular) cavity resonator forming the standing wave in TMₘₙ₀ mode (where m is an integer of 0 or more and n is an integer of 1 or more) and having the cavity 12 of width W1, depth W2, and height H. Herein, m is an integer of 0 or more, and n is an integer of 1 or more. When the resonance frequency of the cavity resonator 11D is f and the speed of light in vacuum is c, the wavelength A of the microwave propagating in the air is expressed as λ = c/f, and W1 < {(m + 2)×λ}√₂ and W2 < {(m + 2)×λ}√₂ are preferably satisfied. When this condition is not satisfied, the standing wave having a higher order than the TMₘₙ₀ mode may be formed, and the electromagnetic field strength may be uneven in the object to be processed. Note that the through-hole 31 and the flow tube 6 are arranged along the central axis XC.
(5) As shown in Figs. 3(A) and 3(B), the cavity resonator 11 (11E) is a rectangular tube type (polygonal) cavity resonator forming the standing wave in TMₘₙ₀ mode (where m is an integer of 0 or more and n is an integer of 1 or more). A cross-sectional area of the polygon (hexagon in the illustrated example) forming a cross-section in the direction perpendicular to the central axis XC of the cavity 12 is assumed to be S, and a height thereof is assumed to be H. When the resonance frequency of the cavity resonator 11E is f and the speed of light in vacuum is c, the wavelength λ of the microwave propagating in the air is expressed as λ = c/f, and the square root value L3 of the cross-sectional area S preferably satisfies L3 < {(m + 2)×λ}√2. When this condition is not satisfied, the standing wave having a higher order than the TMₘₙ₀ mode may be formed, and the electromagnetic field strength may be uneven in the object to be processed. Note that the through-hole 31 and the flow tube 6 are arranged along the central axis XC.

The cavity resonator 11 is a rectangular tube type (rectangular) resonator forming the standing wave in TEₗ₀ₙ mode (where I and n are integers of 1 or more). A length of the cavity 12 in a microwave traveling direction is assumed to be Lm, a length in a direction in which the electric field changes is assumed to be Le, and a length in a direction in which the electric field does not change is assumed to be Ln. When the resonance frequency of the cavity resonator is f and the speed of light in vacuum is c, the wavelength λ of the microwave propagating in the air is expressed as λ = c/f, and Le < λ/√2 and Lm < n×λ/√2 are preferably satisfied. When this condition is not satisfied, the standing wave having a higher order than the TE₁₀ₙ mode may be formed, and the electromagnetic field strength may be uneven in the object to be processed.

As described above, when the dielectric loss factor of the object to be processed is εₘ" and the dielectric loss factor of the dielectric portion is ε_{d}", the cavity resonator 11 preferably satisfies εₘ" > ε_{d}".

When an AC electric field is applied to the dielectric, polarization cannot follow the microwave frequency, and the delay is lost as thermal energy. A coefficient relating to the lost thermal energy is called the dielectric loss factor. That is, the above relationship means that a rate of loss of the dielectric portion as heat energy is smaller than that of the object to be processed when the microwave is applied. Therefore, the supplied microwave energy is efficiently supplied to the object to be processed, and rapid heating of the object to be processed can be achieved.

### <Microwave supply>

The microwave processing apparatus 1 of the present invention is an apparatus suitable for performing the above-described heating control. The microwave processing apparatus 1 includes the cavity resonator 11 having the antenna unit 41 for supplying the microwave, and the microwave generator 5 for supplying the microwave having a frequency capable of forming the standing wave in the cavity resonator 11 to the cavity resonator 11. The microwave generator 5 is also preferably configured to include a microwave amplifier (not shown).

As the microwave generator 5, for example, the microwave generator such as a magnetron, or the microwave generator using a solid-state semiconductor device can be used. From the viewpoint of being small and capable of finely adjusting the microwave frequency, it is preferable to use the microwave generator using the solid-state semiconductor device.

As shown in Figs. 1(A) and 1(B), in the microwave processing apparatus 1, a microwave supply antenna (also simply referred to as the antenna) 43 is provided on a side wall of the cavity 12 in the cavity resonator 11 and at or near a face parallel to the central axis XC of the cavity 12 (the inner face of the cylindrical cavity). In the embodiment, as the antenna 43, it is preferable to use an antenna to which a high frequency can be applied, and a magnetic field excitation antenna, for example, a loop antenna. The antenna 43 is connected to the antenna wire 42 provided in the cavity resonator 11, and is further connected to the microwave generator 5 through the cable 45 electrically connected to the antenna wire 42. As the cable 45, for example, a coaxial cable is used. In this structure, the microwave emitted from the microwave generator 5 is supplied from the antenna 43 into the cavity 12 of the cavity resonator 11 through the cable 45 and the antenna wire 42. A matching device (not shown) for suppressing reflected waves and an isolator (not shown) for protecting the microwave generator may be provided between the microwave generator 5 and the antenna 43.

The other end of the antenna 43 is connected to the ground potential such as a resonator wall face through the grounding wire 44. When the microwave (high frequency) is applied to the antenna 43, the magnetic field is excited in the loop so that the standing wave can be formed in the standing wave formation region (the cavity 12 and the dielectric portion 21) in the cavity resonator 11.

For example, when the single-mode standing wave of TM₀₁₀ is formed in the cylindrical cavity resonator 11, the electric field strength is maximum on the central axis XC and is uniform in the direction of the central axis XC. Therefore, it is possible to uniformly and efficiently microwave-heat the object to be processed which is present or flows in the flow tube 6 or the through-hole 31.

### <Processing of an object to be processed>

In the microwave processing apparatus 1 of the present invention, the object to be processed is disposed to be able to be put in and out of the cavity resonator 11, for example, is present or flows in the flow tube 6, and is disposed depending on the electric field strength inside the cavity resonator 11. Especially when the object is disposed along the portion where the electric field strength of the standing wave formed in the cavity 12 is locally maximized, more efficient microwave processing (for example, heating) can be performed.

Further, when the thickness of the cavity resonator 11 is thin, a plurality of the cavity resonators 11 can also be connected in series in the direction of the central axis XC. The cavity resonators 11 to be connected can be stacked two or more and up to about several thousands.

In the microwave processing apparatus 1 shown in Figs. 1(A) and 1(B), there is no particular limitation on the object to be processed disposed in the flow tube 6, and examples thereof include liquid, solid, powders, and a mixture thereof. Alternatively, they include a honeycomb structure, a catalyst, and the like which are previously provided in the flow tube.

When the object to be processed is fluid, heating of the object to be processed by microwave irradiation may cause one or both of a state change of the fluid and a chemical reaction. The state change includes a temperature change or a phase change of the fluid.

When the object to be processed is liquid, solid, or powders, the object to be processed after heat treatment can be continuously taken out by being transported into the flow tube by a pump or the like. Since progress of many chemical reactions can be controlled by temperature, the microwave processing apparatus of the present invention is suitably used for controlling the chemical reactions.

When the object to be processed is the honeycomb structure, the microwave processing apparatus can be used, for example, for controlling temperature of a gaseous substance passing through the honeycomb structure. When the object to be processed is the catalyst, it can be used for causing the chemical reaction by action of the catalyst as described below. The catalyst is also preferably in a form supported on the honeycomb structure.

Examples of the chemical reactions include transfer reaction, substitution reaction, addition reaction, cyclization reaction, reduction reaction, oxidation reaction, selective catalytic reduction reaction, selective oxidation reaction, racemization reaction, cleavage reaction, catalytic cracking reaction (cracking) and the like, and are not limited thereto, but include various chemical reactions.

Specific examples of the chemical reactions include a reaction for oxidative decomposition of volatile organic substances, a reaction for reducing nitrogen oxides to nitrogen and oxygen, a reaction for fixing sulfur oxides to calcium, and a reaction for lightening heavy oil, and the like.

In a chemical reaction method of the present invention, conditions such as a reaction time, a reaction temperature, a reaction substrate, and a reaction medium can be appropriately set according to a target chemical reaction. For example, chemical reaction conditions can be appropriately set with reference to Chemistry Handbook (edited by Shuichi Suzuki and Mitsuaki Mukaiyama, Asakura Publishing Co., Ltd., 2005), Microwave Chemical Process Technology II (supervised by Kazuhiko Takeuchi, Yuji Wada, CMC Publishing, 2013), JP-A-2010-215677 and the like.

In the embodiment shown in Figs. 1(A) and 1(B), the frequency of the standing wave is not particularly limited as long as the standing wave can be formed in the cavity resonator 11. For example, when the microwave is supplied from the antenna 43 for supplying the microwave, the frequency can be set to a frequency at which the above-described standing wave in TMₘₙ₀ mode or TEₗ₀ₙ mode is formed in the cavity resonator 11.

The standing wave in TMₘₙ₀ mode includes, for example, TM₀₁₀, TM₀₂₀, and TM₀₃₀ modes, and among them, the standing wave in TM₀₁₀ mode is preferable.

Based on a conventional manufacturing method, the cavity resonator of the microwave processing apparatus 1 of the present invention having a reduced size was prototyped. When the microwave was supplied to the cavity resonator, the liquid passing through the through-hole could be heated and controlled. The mass and volume of the present ceramic structure resonator were 1/10 or less than those of the conventional metal cavity resonator.

The shape of the dielectric portion 21 disposed in the cavity 12 of the cavity resonator 11 is such that when the cross-sectional shape perpendicular to the central axis XC is a circle having a diameter D, the dielectric portion 21 disposed inside the cavity 12 is preferably a columnar shape having a diameter d smaller than the diameter D of the cavity 12. Further, the dielectric portion 21 is provided with the through-hole 31 along the central axis XC. When the flow tube 6 is disposed inside the through-hole 31, it is preferable to have a space 7 that is a part of the through-hole 31 between an outer wall of the flow tube 6 and an inner wall of the through-hole 31. Since there is such a space 7, the air layer in the space 7 has a function of a heat insulating wall, and even if the object to be processed in the flow tube 6 or the flow tube 6 is heated, influence of the heat on the dielectric portion 21 is reduced.

Further, it is preferable to have the space (gap) 8 that is a part of the cavity 12 between a side wall of the dielectric portion 21 and an inner wall of the cavity 12. Also in this case, as in the case described above, since the dielectric portion 21 is formed of a material having a high relative dielectric constant, it is easily heated by the microwave. By providing the space 8, the heat generated by heating the dielectric portion 21 is insulated by the air layer in the space 8, and is less likely to be transmitted to the cavity resonator 11.

The microwave processing apparatus 1 can heat the object to be processed passing through the through-hole or the object to be processed passing through the flow tube, or cause the chemical reaction. Alternatively, a gas can be passed through the flow tube to generate plasma.

The microwave processing apparatus 1 is preferably designed so that the resonance frequency of the resonator 2 is within an ISM band which is industrially available. Further, since the resonance frequency varies due to a change in temperature or a change in composition of the object to be processed, the resonance frequency is preferably within the ISM band in consideration of its variation range. "ISM" is an abbreviation of Industry Science Medical, and the ISM band is a frequency band allocated for general use in industrial, scientific, and medical fields.

When the dielectric portion 21 is formed, it is preferable to use a material such as ceramic having a small dielectric loss. When the ceramic having a small dielectric loss is used, the microwave is hardly absorbed by a ceramic layer, and the heat generation of the dielectric portion 21 can be suppressed. Thus, reduction in heating efficiency of the object to be processed can be suppressed. Further, it is possible to prevent risk of inducing troubles such as thermal transformation or ignition of the dielectric portion 21.

The cavity resonator 11 of the microwave processing apparatus 1 can achieve a significant reduction in size and weight as compared with a conventional cavity resonator.

Since the size and weight can be reduced as described above, the microwave processing apparatus can be formed integrally with another apparatus. For example, its applicability is expanded to disposable uses such as temperature control of chemicals in the medical field.

Further, the microwave processing apparatus also has the following effects.
(1) Small size increases the energy density, and enables high-temperature heating more quickly. Accordingly, the range of application to various chemical reactions including synthesis of chemical materials is expanded.
(2) Even if a relatively inexpensive low-power microwave generator is used, sufficient microwave energy can be supplied to the object to be processed. Therefore, apparatus cost can be reduced.
(3) Since the microwave generator and the cavity resonator can be increased or decreased stepwise depending on increase or decrease of production scale, it is possible to flexibly address various production forms.
(4) A desired function can be incorporated, such as installing a wave detector in the cavity resonator. Therefore, for example, a microwave irradiation state and a heating state in the cavity resonator can be detected, the standing wave can be detected by the detector, and the microwave frequency can be adjusted by the microwave generator, so that the cavity resonator 11 can be controlled. As a result, temperature of the object to be processed in the flow tube can be finely controlled.

### EXAMPLES

The present invention will be described in more detail based on examples given below, but the invention is not meant to be limited by these.

### [Example 1]

As a test body, the microwave processing apparatus 1 having the cylindrical cavity resonator shown in Figs. 1(A) and 1(B) was manufactured. The cavity resonator was made of aluminum, to have an inner diameter of the cavity of 2.2 cm and a height of 1.01 cm. The through-hole having a diameter of 1.05 cm was provided on the central axis XC of the cavity of the cavity resonator. The dielectric portion having a relative dielectric constant of 40 and a dielectric loss factor of 0.0005 was manufactured by KYOCERA Corporation, and was formed in a columnar shape having a diameter D of 1.8 cm and a height H of 1.0 cm. This central axis was also provided with a through-hole which is aligned with the central axis XC of the cavity and has a diameter of 1.1 cm. In the dielectric portion, one side hole (not shown) having a diameter of 5 mm was formed in the side wall so that the temperature of the object to be heated as the object to be processed provided in the through-hole could be measured. Similarly, an observation hole (not shown) having a diameter of 5.5 mm for temperature measurement was also provided on a side wall of the cavity resonator. At this time, the volume of the cavity of the cavity resonator was 3.8 cm³, and the volume of the dielectric portion was 1.5 cm³. A space factor of the dielectric portion in the cavity is 40%.

The antenna 43 for supplying the microwave, the antenna wire 42, the grounding wire 44, the antenna and the antenna wire of the detector (not shown), and the like were attached to the cavity resonator in advance.

As a result, it was possible to obtain a miniaturized cavity resonator including the dielectric portion having a volume of 4.25 cm³ and a mass of 60 g in outer dimensions of the cavity resonator. On the other hand, the conventional cavity resonator had a volume of 200 cm³ (10 cm×10 cm×2 cm) in the outer dimensions and a mass of 1.3 kg. Thus, the microwave processing apparatus 1 of the present invention was able to achieve the reduction in size and weight.

An N-type terminal and an SMA terminal were respectively attached to the microwave (power) supply side antenna 43 and a detector side antenna (not shown) of the manufactured test body, and an S11 signal was measured by a network analyzer (Agilent E5071C (product name)).

Examination of a spectrum of the S11 signal of the test body revealed that the S11 signal was -14 dB at a frequency of 2.63325 GHz, and that the standing wave in TM₀₁₀ mode could be formed.

### [Example 2]

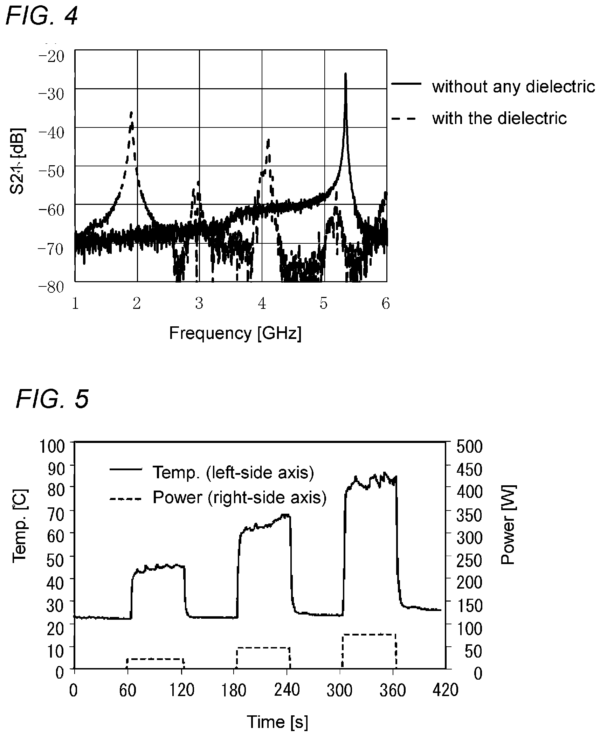

As the test body, the microwave processing apparatus 1 (see Figs. 1(A) and 1(B)) having a TM₀₁₀ mode cylindrical cavity resonator for 1.9 GHz was manufactured. As the cavity resonator 11, an aluminum cylindrical cavity resonator was manufactured to have an inner diameter of 4.4 cm and a height of 1.0 cm. The through-hole 31 having a diameter of 1.05 cm was provided on the central axis XC of the cavity of the cavity resonator 11. As the dielectric portion 21, the same ceramic as in Example 1 having a relative dielectric constant of 40 and having the through-hole 31 of an outer diameter of 1.8 cm, a height of 1.0 cm, and an inner diameter of 1.1 cm on the central axis XC was used. Fig. 4 shows a measurement result of an S21 signal measured using the network analyzer with respect to a change in the resonance frequency when the dielectric portion 21 is provided in the present cavity resonator and when the dielectric portion 21 is not provided therein. It was found that the resonance frequency was 5.33375 GHz when the dielectric portion was not present in the cavity, and was 1.8985 GHz when the dielectric portion 21 was disposed therein. When manufacturing the cylindrical cavity resonator for 1.8985 GHz without disposing the dielectric portion, the inner diameter of 12.1 cm is required, whereas in the case of the cavity resonator of Example 2, the inner diameter was 4.4 cm and size reduction of 36% was achieved in the inner diameter. The cavity of the cavity resonator had a volume of 15.2 cm³, and the volume of the dielectric portion was 3.8 cm³. Therefore, the space factor of the dielectric portion 21 in the cavity was 25%.

### [Example 3]

Next, in the test body of Example 1 described above, the flow tube made of silicone tube was inserted as the flow tube 6 having an outer diameter of 2 mm and an inner diameter of 1 mm so as to pass through the central axis XC of the through-hole 31 of the test body. As a result, it was found that the resonance frequency of the S11 signal was 2.63275 GHz. Further, when the flow tube 6 was filled with pure water, it was found that the resonance frequency of the S11 signal was 2.6240 GHz.

Next, while supplying pure water in a range of 1 mL/min to 8 mL/min to a silicon tube by a liquid feed pump (not shown), the microwave having the same frequency with the resonance frequency was incident from the antenna 43 on a power supply side in a range of 0W to 90W. The resonance frequency was examined by finely adjusting an irradiation frequency so that the signal of the detector-side antenna (not shown) was maximized. Feedback control was performed to automatically perform these controls, and a system was constructed so that the microwave of a predetermined power having the same frequency with the resonance frequency could be supplied at all times. Thus, the standing wave in TM₀₁₀ mode was formed. Temperature of the supplied pure water was measured with a 0.5 mm-thick ultrafine thermocouple (T-35 type, K0.5ϕ×100, manufactured by SAKAGUCHI E.H VOC CORP.) attached in the silicon tube. A thermocouple tip temperature measuring portion was disposed at a position 1 mm away from an exit end of the through-hole 31 of the cavity resonator 11. A temperature rise ΔT was defined as a difference between a liquid temperature before microwave irradiation and an average temperature from 10 seconds to 60 seconds after microwave irradiation. A microwave input power ΔP was defined as an effective power obtained by subtracting a reflected wave power from an incident wave power of the antenna 43 on the power supply side.

A feed rate of pure water was 6 mL/min. Fig. 5 shows a time change of the temperature when the input power is supplied to the test body 1 while gradually increasing the input power to 22W, 47W, and 76W. The temperature was 22°C before the microwave was supplied, but the temperature rose immediately after irradiation with the microwave 22W at a timing of 60 seconds to 120 seconds, and reached 44°C after 10 seconds. When the microwave irradiation was stopped after 120 seconds, reduction in temperature was observed. Similarly, it was observed that it was heated to 61°C or more when the microwave of 47W (a section of 180 seconds to 240 seconds) was supplied, and it was heated to 80°C or more when the microwave of 76W (a section of 300 seconds to 360 seconds) was supplied. In both cases, since the temperature was immediately reduced when the microwave irradiation was stopped, it was confirmed that the temperature rise within a microwave irradiation time was caused by the heat generation due to the microwave absorption by pure water.

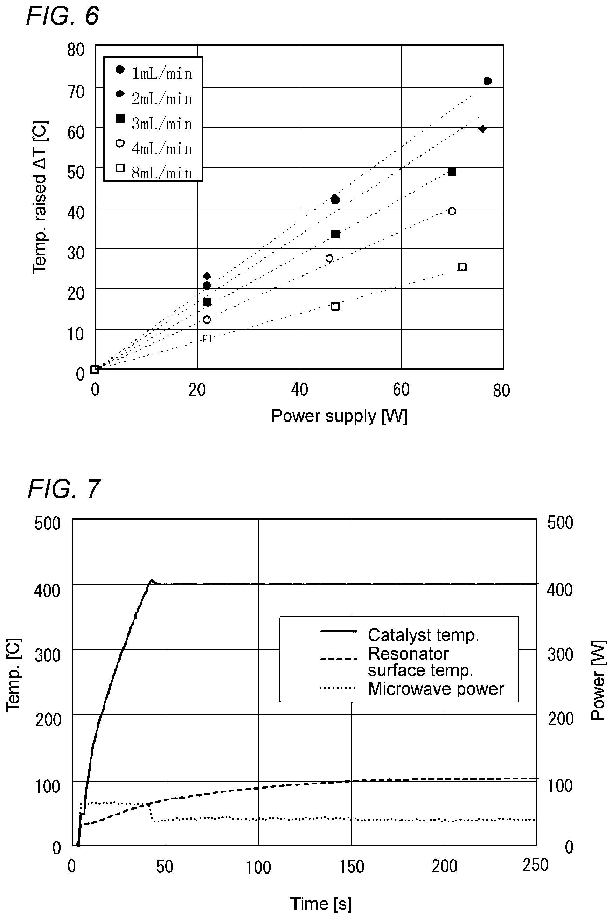

Fig. 6 shows results of examining values of ΔT when the feed rate of pure water is changed from 1 mL/min to 8 mL/min and the microwave input power is changed in a range of 0W to 80W, where ΔT is the temperature rise due to the microwave irradiation. It was found that the temperature of pure water could be adjusted by adjusting the microwave input power depending on the flow rate of pure water.

### [Example 4]

Temperature of the catalyst for decomposing volatile organic solvents (VOCs) was controlled as the object to be processed. The cavity resonator 11 and the dielectric portion 21 used were the same as in Example 1. The flow tube 6, in which a quartz reaction tube having an outer diameter of 10 mm and an inner diameter of 8 mm and filled with a mixture of porous alumina sieved in a particle size range of 250 µm to 500 µm and silicon carbide at a ratio of 10:1 as a simulated catalyst, was disposed in the through-hole 31. For the catalyst temperature, a radiation thermometer (TMHX-STM0050 manufactured by Japan Sensor Corporation) was attached to a 5.5 mm diameter measurement hole (not shown) provided on a side wall perpendicular to the central axis XC of the cavity resonator 11. At this time, the same measurement hole was also provided on a circumferential wall of the dielectric portion 21 and disposed to match the measurement hole of the cavity resonator 11 and a measurement portion of the radiation thermometer. The radiation thermometer used is sensitive to infrared wavelength of 3 to 4 µm and can measure the temperature in the quartz reaction tube. Further, a thermocouple was brought into close contact with the outer face of the cavity resonator 11, and a face temperature of the cavity resonator 11 was also measured at the same time.

Fig. 7 shows a change in the catalyst temperature, the face temperature of the cavity resonator 11, and microwave power when microwave irradiation power is adjusted by feedback control (for example, PID control) so that an indicated value of the radiation thermometer is 400°C. It was found that after start of an experiment, the microwave of 65W at maximum was irradiated and reached a target temperature of 400°C in 35 seconds, and then the microwave power was adjusted with an average of 43W, so that the catalyst temperature could be maintained at 400°C. It has been confirmed that a solid catalyst for a gas phase reaction can be rapidly heated according to the present invention. On the other hand, since the dielectric loss factor ε_{d}" of the dielectric portion 21 is 0.0005, the microwave absorption by the dielectric portion is not 0, and the heat generation is expected. As shown in Fig. 7, temperature indication on the outer wall of the cavity resonator slowly rises with the microwave irradiation and reaches 100°C after 200 seconds. This is considered to be an effect of the microwave absorption by the dielectric portion 21. On the other hand, when the relative dielectric constant of the simulated catalyst was measured by a perturbation method, the relative dielectric constant was 2.6 and the dielectric loss factor εₘ" was 0.03. Since εₘ" > ε_{d}", it was confirmed that the temperature rise of the catalyst was larger and the heating of the catalyst could be controlled.

### [Example 5]

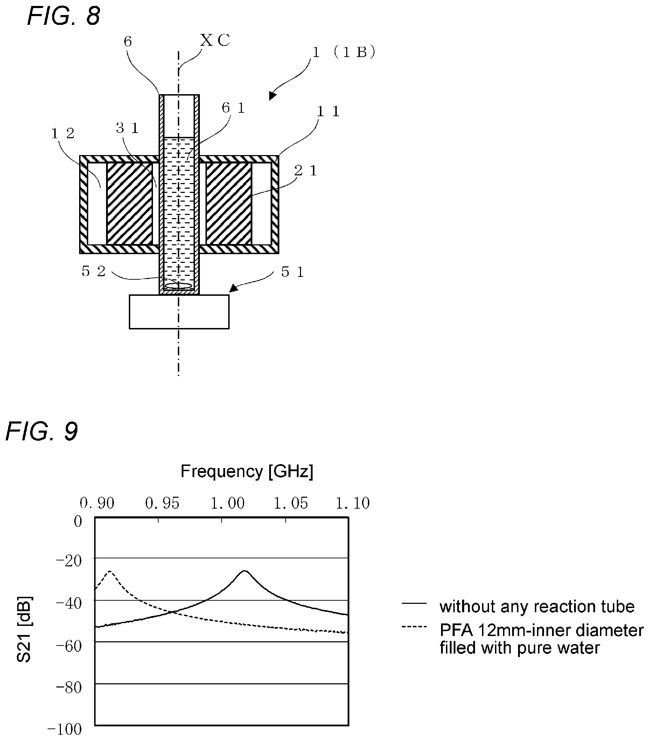

The microwave processing apparatus 1 (1B) shown in Fig. 8 was manufactured using the cylindrical cavity resonator in the 915 MHz band. The microwave processing apparatus 1B shown in Fig. 8 has the same structure as the microwave processing apparatus 1A except that a liquid 61 is not allowed to flow as the object to be processed in the flow tube 6 (see Figs. 1(A) and 1(B)). In Example 5, the flow tube is called the reaction tube. That is, the liquid 61 was held in a reaction tube 6 at a height higher than the height of the dielectric portion 21. The microwave processing apparatus 1B is a batch-type microwave processing apparatus including a microwave oscillator (not shown), the cavity resonator 11, and a magnetic stirrer 51. The cavity resonator 11 has the cavity 12 having an inner diameter of 4.4 cm and a height of 1.01 cm, and the through-hole 31 having a diameter of 1.3 cm is provided on the central axis XC of the cavity 12. The dielectric portion 21 having a relative dielectric constant of 40 and a dielectric loss factor of 0.0005 was manufactured by KYOCERA Corporation, and was formed in a columnar shape having a diameter D of 3.5 cm and a height H of 1.0 cm. This central axis was also provided with a through-hole having a diameter of 1.4 cm, which was aligned with the central axis XC of the cavity. At this time, the volume of the cavity 12 was 15.2 cm³, and the volume of the dielectric portion 21 was 8.1 cm³. The space factor of the dielectric portion 21 in the cavity 12 is 53%. A miniaturized cavity resonator including the dielectric portion 21 was obtained, in which the cavity resonator 11 has a volume of 72 cm³ in outer dimensions and a mass of 225 g. On the other hand, the conventional cavity resonator had a volume of 1847 cm³ (diameter 28 cm × height 3 cm) in outer dimensions and a mass of 2.8 kg.

Using the network analyzer, the S21 signal of the test body manufactured above was measured. From a waveform of the S21 signal shown in Fig. 9, it was found that in the case of only the microwave processing apparatus 1B, the standing wave in TM₀₁₀ mode was formed at a frequency of 1.018 GHz.

### [Example 6]

The reaction tube (test tube) made of a tetrafluoroethylene/perfluoroalkyl vinyl ether copolymer (PFA) having an outer diameter of 13 mm and an inner diameter of 12 mm is inserted to pass through the central axis XC of the through-hole 31 of the microwave processing apparatus 1B, and 3.4 ml of pure water was added therein, to be stirred with a stirrer. The height of the liquid in the test tube was 3 cm while the irradiation height of the cavity resonator was 1.01 cm. The S21 signal in this state is also shown in Fig. 9. It was found that the standing wave in TM₀₁₀ mode was formed at a frequency of 918.12 MHz.

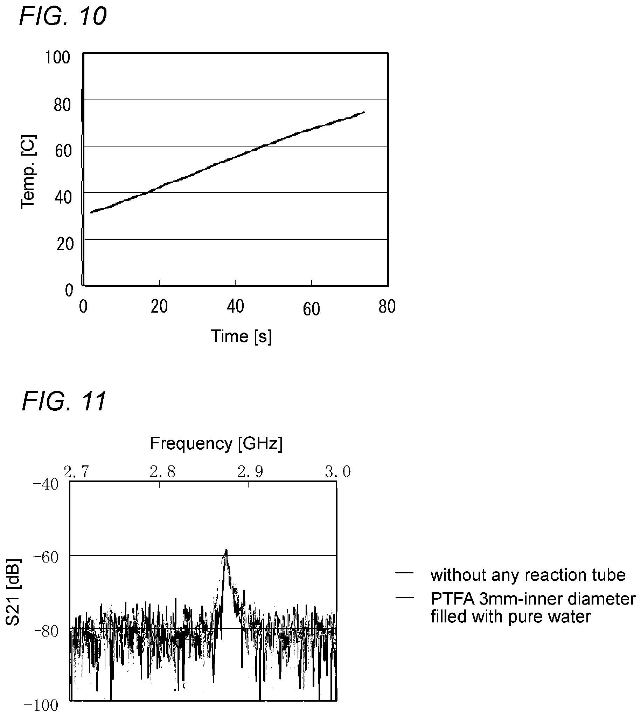

Next, Fig. 10 shows temperature rise characteristics when the microwave having an output of 100W is irradiated. The temperature was measured using an optical fiber thermometer (FL-2000 (product name) manufactured by Anritsu Meter Co., Ltd.) (not shown), and the temperature of pure water was measured at a center position in the cavity resonator 11. It was found that the temperature rose to nearly 80°C by heating for about 40 seconds.

As described above, even in the 915 MHz band, the microwave processing apparatus 1B achieving the reduction in size and weight could be manufactured.

### [Example 7]

The microwave processing apparatus 1 was manufactured using the cylindrical cavity resonator that forms the standing wave in TM₁₁₀ mode. The cavity resonator 11 of the microwave processing apparatus 1 had the cavity 12 having an inner diameter of 9.15 cm, a height of 1.01 cm, and the through-hole 31 having a diameter of 1.1 cm was provided on the central axis XC of the cavity 12. The dielectric portion 21 was disposed in the cavity 12. The dielectric portion 21 was made of polytetrafluoroethylene (PTFE) having a relative dielectric constant of 2.1 and a dielectric loss of 0.0004, and was formed in a columnar shape having a diameter D of 6.5 cm and a height H of 1.0 cm. This central axis was also provided with the through-hole 31 having a diameter of 1.1 cm, which was aligned with the central axis XC of the cavity 12. At this time, the volume of the cavity 12 was 66.4 cm³, and the volume of the dielectric portion 21 was 32.2 cm³. The space factor of the dielectric portion 21 in the cavity 12 was 48%. On the other hand, in the case of the conventional cavity resonator that does not include the dielectric portion 21 and forms the standing wave in TM₁₁₀ mode, the inner diameter of the cavity is 12.7 cm, the height is 1.01 cm, and the volume of the cavity was 127.9 cm³. By including the dielectric portion, it was possible to obtain the cavity resonator having a volume reduced to 52% as compared with the conventional one.

The S21 signal of the microwave processing apparatus 1 manufactured above was measured using the network analyzer. From the waveform of the S21 signal shown in Fig. 11, it was found that in the case of the microwave processing apparatus 1 in which the reaction tube 6 was not disposed, the standing wave in TM₁₁₀ mode was formed at a frequency of 2.875 GHz.

### [Example 8]

Next, in the microwave processing apparatus 1, the flow tube made of PTFE was inserted as the flow tube 6 having an outer diameter of 4 mm and an inner diameter of 3 mm so as to pass through the central axis XC of the through-hole 31, and pure water was allowed to flow. The S21 signal measured in this state is also shown in Fig. 11. Two waveforms almost overlap each other, and it was found that the standing wave in TM₁₁₀ mode was formed stably even when pure water was allowed to flow.

### [Example 9]

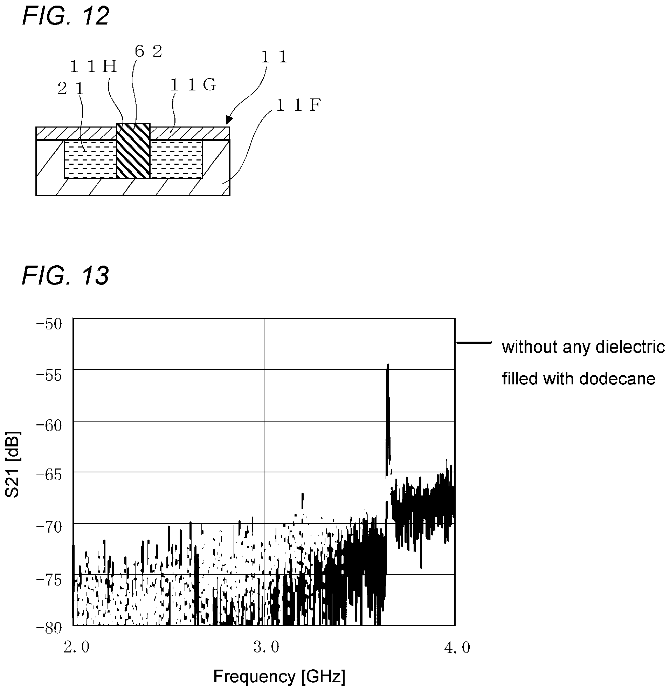

Fig. 12 shows an Example using a liquid as the dielectric. As the cavity resonator 11, an aluminum cavity resonator having a cavity inner size (inner diameter) of 63 mm and a height of 5 mm was used. This cavity is a space formed by setting a bottom of a recessed main body 11F to a lower side (without disposing the through-hole), covering the main body 11F with a flat upper lid 11G, and fixing the upper lid 11G from above by a screw or the like. The drawing shows the space filled with the liquid dielectric portion 21. A hole 11H having a diameter of 10 mm is provided in a center of the upper lid 11G, which is one end face side of the cavity resonator 11, from which a solid object 62 to be processed can be directly inserted into the cavity. Fig. 13 shows results of measuring the resonance frequency when the cavity is in a space state and the resonance frequency when dodecane (relative dielectric constant is 2.0) is filled as the dielectric portion 21 in the cavity, by the S21 signal of the network analyzer. It was found that the resonance frequency when nothing was in the cavity was 3.650 GHz, whereas the resonance frequency when dodecane was filled as the liquid dielectric was 2.655 GHz. In order to form the standing wave in TM₀₁₀ mode at 2.655 GHz in the cylindrical resonance cavity, the inner diameter of the cavity must be 86.4 mm when the dielectric is not filled, however, it was found that by filling the cavity with liquid dodecane, the inner diameter of the cavity could be downsized to 63 mm. When the liquid is used for the dielectric portion 21, even in the case of the object to be processed having a complicated outline, since the liquid penetrates into a gap between the object to be processed and the air layer and the air layer can be reduced, there is a feature that the size can be further reduced.

In addition to the above-mentioned dodecane, examples of the liquid dielectric include toluene (relative dielectric constant ε' = 2.4, dielectric loss factor ε" = 0.096), hexane (ε' = 1.9, ε" = 0.038), o-xylene (ε' = 2.6, ε" = 0.047), chlorobenzene (ε' = 2.6, ε" = 0.263) and the like. Further, the liquid dielectrics include carbon tetrachloride, Fluorinert, benzene, and the like. The liquid dielectric can be circulated using the liquid feed pump or the like. By circulating the liquid dielectric cooled outside, the object to be processed can be quickly cooled after being irradiated with the microwave.

Having described our invention as related to the embodiments and Examples, it is our intention that the invention not be limited by any of the details of the description, unless otherwise specified, but rather be construed broadly within its spirit and scope as set out in the accompanying claims.

This application claims priority on Patent Application No. 2017-228474 filed in Japan on November 28, 2017, which is entirely herein incorporated by reference.

### DESCRIPTION OF SYMBOLS

1, 1A, 1B Microwave processing apparatus
5 Microwave generator
6 Tube, flow tube, reaction tube
7, 8 Space
11 Cavity resonator
12 Cavity
21 Dielectric portion
31 Through-hole
41 Antenna unit
42 Antenna wire
43 Antenna
44 Grounding wire
45 Cable

## Claims

1. A microwave processing apparatus, including:
a cavity resonator having a cavity that forms a standing wave of a microwave; and
a dielectric portion disposed occupying at least one-fifth of a volume of the cavity, in the cavity,
wherein an object to be processed that can be put in and out of the cavity resonator is disposed in the cavity resonator, and
the object to be processed is processed by the standing wave.

2. The microwave processing apparatus according to claim 1, wherein when a dielectric loss factor of the object to be processed is εₘ" and the dielectric loss factor of the dielectric portion is ε_{d}", the microwave processing apparatus satisfies εₘ" > ε_{d}".

3. The microwave processing apparatus according to claim 1 or 2, wherein the object to be processed is disposed at a position where an electric field strength or a magnetic field strength in the cavity resonator becomes locally maximum.

4. The microwave processing apparatus according to any one of claims 1 to 3, wherein the object to be processed is disposed in a tube disposed in the cavity resonator, and the object to be processed that is filled in or continuously introduced into the tube is processed by the microwave.

5. The microwave processing apparatus according to any one of claims 1 to 4, wherein when a resonance frequency of the cavity resonator is f and a speed of light in vacuum is c, a wavelength λ of the microwave propagating in the air is expressed as λ = c/f, and a maximum dimension L1 of the cavity satisfies L1 < λ/√2.

6. The microwave processing apparatus according to any one of claims 1 to 5, wherein when a wavelength of the microwave propagating in the air is λ, and a diameter of an equivalent volume sphere of the cavity resonator calculated as a cubic root of an internal volume V of the cavity is L2, the cavity resonator satisfies L2 < λ/√2.

7. The microwave processing apparatus according to any one of claims 1 to 6, wherein the cavity resonator is a cylindrical resonator with the cavity of diameter D and height H, which forms a standing wave in TMₘₙ₀ mode, and when a resonance frequency of the cavity resonator is f and a speed of light in vacuum is c, a wavelength λ of the microwave propagating in the air is expressed as λ = c/f, and the cavity resonator satisfies D < {(m + n) × λ}√2. Herein, m is an integer of 0 or more, and n is an integer of 1 or more.

8. The microwave processing apparatus according to any one of claims 1 to 6, wherein the cavity resonator is a rectangular resonator with the cavity of width W1, depth W2, and height H, which forms a standing wave in TMₘₙ₀ mode, and when a resonance frequency of the cavity resonator is f and a speed of light in vacuum is c, a wavelength λ of the microwave propagating in the air is expressed as λ = c/f, and the cavity resonator satisfies W1 < {(m + n) × λ}/√2 and W2 < {(m + n) × λ}√2. Herein, m is an integer of 0 or more, and n is an integer of 1 or more.

9. The microwave processing apparatus according to any one of claims 1 to 6, wherein the cavity resonator is a polygonal resonator with the cavity of cross-sectional area S and height H, which forms a standing wave in TMₘₙ₀ mode, and when a resonance frequency of the cavity resonator is f and a speed of light in vacuum is c, a wavelength λ of the microwave propagating in the air is expressed as λ = c/f, and a square root value L3 of the cross-sectional area S satisfies L3 < {(m + n) × λ}√2. Herein, m is an integer of 0 or more, and n is an integer of 1 or more.

10. The microwave processing apparatus according to any one of claims 1 to 6, wherein the cavity resonator is a rectangular resonator that forms a standing wave in TEₗ₀ₙ mode, and when a length in a microwave traveling direction in the cavity is Lm, a length in a direction in which an electric field changes is Le, a resonance frequency of the cavity resonator is f and a speed of light in vacuum is c, a wavelength λ of the microwave propagating in the air is expressed as λ = c/f, and the cavity resonator satisfies Le < λ/√2 and Lm < (n × λ)/√2. Herein, l and n are integers of 1 or more.

11. The microwave processing apparatus according to any one of claims 1 to 10, wherein the dielectric portion has a relative dielectric constant of 1.5 or more and a dielectric loss factor of 0.1 or less.

12. The microwave processing apparatus according to any one of claims 1 to 11, wherein the object to be processed is a gas, a liquid, or a solid.

13. The microwave processing apparatus according to any one of claims 1 to 12, wherein the microwave processing apparatus is a chemical reactor that processes the object to be processed with the microwave, to cause a chemical reaction.

14. A microwave processing method, including: using the microwave processing apparatus according to any one of claims 1 to 13, to process the object to be processed by the standing wave of a microwave.

15. A chemical reaction method, including: using the microwave processing apparatus according to any one of claims 1 to 13, to cause a chemical reaction by processing the object to be processed.
